# EUROPEAN PATENT APPLICATION

(11) **EP 4 327 673 A1**
(43) Date of publication of application: **28.02.2024**
(21) Application number: 21937920.3
(22) Date of filing: 23.04.2021
(51) Int. Cl.: A24F 40/40

(54) **FLAVOR INHALER**

(71) Applicant: Japan Tobacco Inc., Tokyo 105-6927 (JP)
(72) Inventor: MASUDA, Yuki, Tokyo 130-8603 (JP); FUKUZAWA, Kazuaki, Tokyo 130-8603 (JP); YAMADA, Manabu, Tokyo 130-8603 (JP)
(74) Representative: Hoffmann Eitle
(86) International application number: PCT/JP2021/016426
(87) International publication number: WO 2022/224428

(57) **Abstract**

Provided is a flavor inhaler capable of storing an object to be stored within a storage part even after the flavor inhaler is subjected to impact. The flavor inhaler is provided with: a first member and a second member that are connected to each other at peripheral portions thereof to form a storage part for storing an object to be stored, and have a substantially rectangular shape in a plan view with respect to the peripheral portions; and first connection parts for connecting the first member and the second member. The first connection parts are disposed at multiple positions spaced apart from one another in the peripheral portions of the first member and the second member.

## Description

### TECHNICAL FIELD

The present invention relates to a flavor inhaler.

### BACKGROUND ART

To date, a flavor inhaler for inhaling a flavor or the like without burning a material is known. As such a flavor inhaler, for example, there is known a device in which a first housing including a heater and a second housing including a battery, which are coupled to each other, are accommodated in a tubular case and the second housing and the case are coupled by a coupler at one end of the case (see, for example, PTL 1).

### CITATION LIST

### PATENT LITERATURE

PTL 1: Japanese Unexamined Patent Application Publication (Translation of PCT Application) No. 2020-527043

### SUMMARY OF INVENTION

### TECHNICAL PROBLEM

However, with the flavor inhaler described in PTL 1, since the second housing and the case are coupled at one end of the case, for example, if an impact is applied to the flavor inhaler due to dropping of the flavor inhaler or the like, it is likely that the coupler breaks, the second housing is removed from the case, and a content spills out.

The present invention has been made to solve at least a part of the above problem, and an object thereof is to obtain a flavor inhaler that can keep accommodating a content within a container even if an impact is applied to the flavor inhaler.

### SOLUTION TO PROBLEM

According to a first aspect of the present invention, a flavor inhaler is provided. The flavor inhaler includes: a first member and a second member that are coupled to each other at peripheral portions thereof to form a container for accommodating a content and each of which has a substantially quadrangular shape in a plan view with respect to the peripheral portions; and first couplers that couple the first member and the second member to each other, The first couplers are provided in the peripheral portions of the first member and the second member at a plurality of positions that are spaced apart from each other.

With the first aspect of the present invention, it is possible to couple the first member and the second member firmly, by providing the first couplers in the peripheral portions of the first member and the second member, each of which has a substantially quadrangular shape in a plan view with respect to the peripheral portions, at a plurality of positions that are spaced apart from each other. Therefore, even if an impact is applied to the flavor inhaler, it is possible to keep accommodating the content in the container.

According to a second aspect of the present invention, in the first aspect, the first couplers are provided in the peripheral portions of the first member and the second member at least at each of two sides that face each other.

With the second aspect of the present invention, it is possible to couple the first member and the second member more firmly, by providing the first couplers in the peripheral portions of the first member and the second member at least at each of two sides that face each other.

According to a third aspect of the present invention, in the first or second aspect, the content includes a battery for driving the flavor inhaler, and at least one of the first couplers is provided in a vicinity of the battery.

With the third aspect of the present invention, it is possible to prevent a gap from being formed between the first member and the second member in the vicinity of the battery and to prevent the battery from spilling out from the container when an impact is applied to the flavor inhaler, by providing at least one of the first couplers in the vicinity of the battery.

According to a fourth aspect of the present invention, in the third aspect, the first couplers are provided in a vicinity of each of two ends in an extension direction of the battery.

With the fourth aspect of the present invention, it is possible to further prevent a gap from being formed between the first member and the second member in the vicinity of the battery and to prevent the battery from spilling out from the container when an impact is applied to the flavor inhaler, by providing the first couplers in the vicinity of each of two ends in the extension direction of the battery.

According to a fifth aspect of the present invention, in any one of the first to fourth aspects, the content includes a heater for heating a flavor generating article provided in the flavor inhaler, and at least one of the first couplers are provided in a vicinity of the heater.

With the fifth aspect of the present invention, it is possible to prevent a gap from being formed between the first member and the second member in the vicinity of the heater and to prevent the heater from spilling out from the container when an impact is applied to the flavor inhaler, by providing the first couplers in the vicinity of the heater.

According to a sixth aspect of the present invention, in any one of the first to fifth aspects, the first couplers couple the first member and the second member to each other by using at least one of a screw and a latch.

With the sixth aspect of the present invention, it is possible to couple the first member and the second member firmly or with a simple configuration, by coupling the first member and the second member to each other by using at least one of the screw and the latch as the first couplers.

According to a seventh aspect of the present invention, in the sixth aspect, the first couplers include the screw and the latch, and the flavor inhaler include a portion in which the screw and the latch are disposed alternately along the peripheral portions of the first member and the second member.

With the seventh aspect of the present invention, it is possible to maintain a state in which the first member and the second member are coupled without deviation due to the latch even if the screw is removed, by including the screw and the latch as the first couplers and by providing the portion in which the screw and the latch are disposed alternately along the peripheral portions of the first member and the second member.

According to an eighth aspect of the present invention, the flavor inhaler in any one of the first to seventh aspects further includes: a supporter that is accommodated in the container and fixed to the first member to support the content; and a second coupler that couples the second member to the supporter.

With the eighth aspect of the present invention, it is possible to couple the first member and the second member further firmly, by coupling the supporter, which is fixed to the first member, and the second member by using the second coupler.

### BRIEF DESCRIPTION OF DRAWINGS

Fig. 1A is a schematic front view of a flavor inhaler according to the present embodiment.
Fig. 1B is a schematic top view of the flavor inhaler according to the present embodiment.
Fig. 1C is a schematic bottom view of the flavor inhaler according to the present embodiment.
Fig. 2 is a schematic side sectional view of a flavor generating article.
Fig. 3 is a sectional view of the flavor inhaler taken along line 3-3 of Fig. 1B.
Fig. 4A is a perspective view of a chamber.
Fig. 4B is a sectional view of the chamber taken along line 4B-4B of Fig. 4A.
Fig. 5A is a sectional view of the chamber taken along line 5A-5A of Fig. 4B.
Fig. 5B is a sectional view of the chamber taken along line 5B-5B of Fig. 4B.
Fig. 6 is perspective view of the chamber and a heater.
Fig. 7 is a sectional view, corresponding to Fig. 5B, illustrating a state in which the flavor generating article is disposed at a desirable position in the chamber.
Fig. 8 is an exploded side view of an outer housing.
Fig. 9 is a perspective view of the outer housing.
Fig. 10 is a front view of a first housing and a chassis.
Fig. 11 is a front view of a second housing.
Fig. 12 is a perspective view of the second housing.
Fig. 13 is a front view of the first housing and the second housing that are coupled to each other.

### DESCRIPTION OF EMBODIMENTS

Hereafter, embodiments of the present invention will be described with reference to the drawings. In the drawings described below, the same or corresponding structural elements will be denoted by the same numerals and redundant descriptions thereof will be omitted.

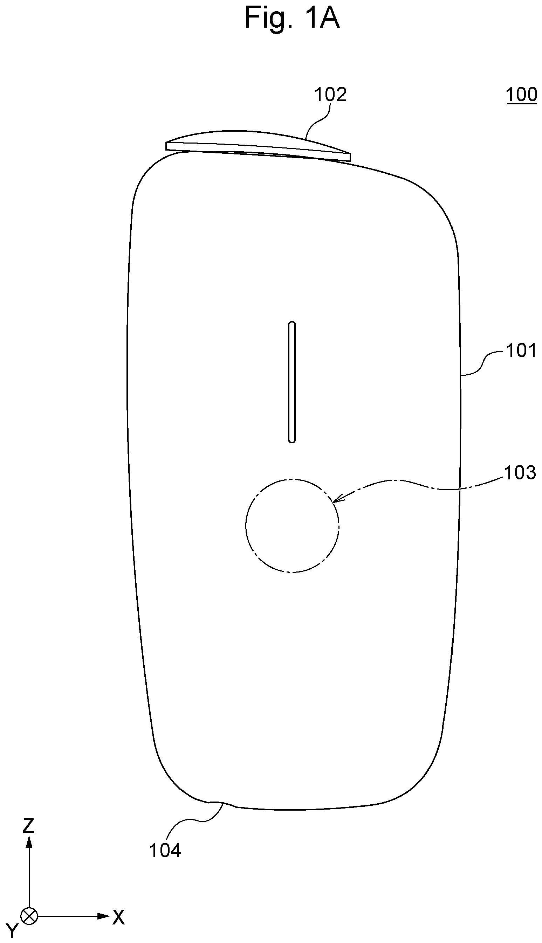

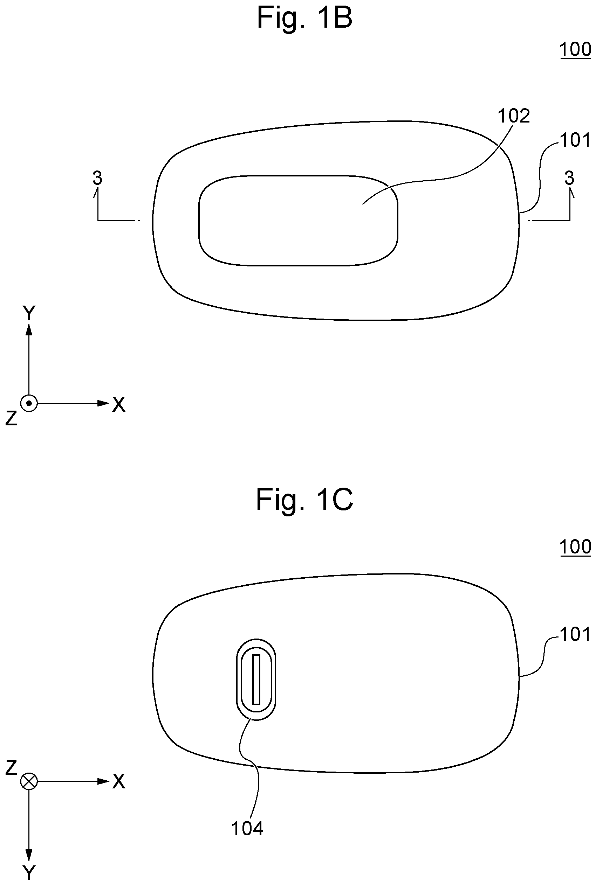

Fig. 1A is a schematic front view of a flavor inhaler 100 according to the present embodiment. Fig. 1B is a schematic top view of the flavor inhaler 100 according to the present embodiment. Fig. 1C is a schematic bottom view of the flavor inhaler 100 according to the present embodiment. For convenience of description, an X-Y-Z orthogonal coordinate system may be added to the figures described in the present description. In the coordinate system, the Z axis is oriented vertically upward, the X-Y plane is disposed so as to cut the flavor inhaler 100 in the horizontal direction, and the Y axis is disposed so as to extend from the front side to the back side of the flavor inhaler 100. It may be said that the Z axis is an insertion direction of a flavor generating article accommodated in a chamber 50 of an atomizer 30 described below, or the axial direction of the chamber 50. The X axis is a direction that is perpendicular to the Y axis and the Z axis.

The flavor inhaler 100 according to the present embodiment is configured to generate an aerosol including a flavor by, for example, heating a stick-type flavor generating article having a flavor source including an aerosol source.

As illustrated in Figs. 1A to 1C, the flavor inhaler 100 includes an outer housing 101, a slide cover 102, a switch portion 103, and a terminal 104. The outer housing 101 constitutes the outermost housing of the flavor inhaler 100, and has a size that fits a hand of a user. When using the flavor inhaler 100, a user can hold the flavor inhaler 100 by hand and inhale the aerosol. The outer housing 101 may be configured by assembling a plurality of members described below. The outer housing 101 may be formed of, for example, a metal such as aluminum. The outer housing 101 may have a member formed of: a resin such as polycarbonate (PC), ABS (Acrylonitrile-Butadiene-Styrene) resin, or PEEK (polyetheretherketone); a polymer alloy including a plurality of types of polymers; or the like.

The outer housing 101 has an opening (not shown) for receiving the flavor generating article, and the slide cover 102 is slidably attached to the outer housing 101 so as to close the opening. To be specific, the slide cover 102 is movable along an outer surface of the outer housing 101 between a closed position for closing the opening of the outer housing 101 (the position illustrated in Figs. 1A and 1B) and an open position for opening the opening. For example, a user can move the slide cover 102 to the closed position and the open position by manually operating the slide cover 102. Thus, the slide cover 102 can permit or limit access of the flavor generating article to the inside of the flavor inhaler 100.

The switch portion 103 is used to switch between on and off of the operation of the flavor inhaler 100. For example, when a user operates the switch portion 103 in a state in which the flavor generating article is inserted into the flavor inhaler 100, electric power is supplied from a power supply (not shown) to a heater (not shown), and it is possible to heat the flavor generating article without burning the flavor generating article. The switch portion 103 may be a switch provided outside of the outer housing 101, or may be a switch positioned inside of the outer housing 101. In a case where the switch is positioned inside of the outer housing 101, when the switch portion 103 on a surface of the outer housing 101 is pressed, the switch is pressed indirectly. In the present embodiment, an example in which the switch of the switch portion 103 is positioned inside of the outer housing 101 will be described.

The terminal 104 is an interface that connects the flavor inhaler 100 with, for example, an external power supply. When the power supply included in the flavor inhaler 100 is a rechargeable battery, it is possible to charge the power supply by connecting an external power supply to the terminal 104 to allow an electric current to flow from the external power supply to the power supply. The flavor inhaler 100 may be configured to be capable of transmitting data related to the operation of the flavor inhaler 100 by connecting a data communication cable to the terminal 104.

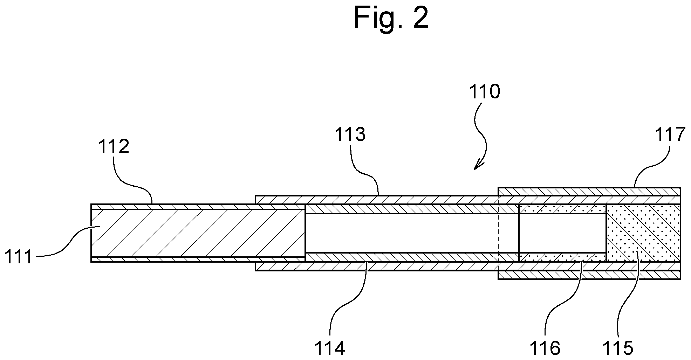

Next, a flavor generating article used in the flavor inhaler 100 according to the present embodiment will be described. Fig. 2 is a schematic side sectional view of a flavor generating article 110. In the present embodiment, a smoking system may be constituted by the flavor inhaler 100 and the flavor generating article 110. In the example illustrated in Fig. 2, the flavor generating article 110 includes a smokable article 111, a tubular member 114, a hollow filter portion 116, and a filter portion 115.

The smokable article 111 is wrapped by first wrapping paper 112. The tubular member 114, the hollow filter portion 116, and the filter portion 115 are wrapped by second wrapping paper 113 that is different from the first wrapping paper 112. The second wrapping paper 113 also wraps a part of the first wrapping paper 112 that wraps the smokable article 111. Thus, the tubular member 114, the hollow filter portion 116, the filter portion 115, and the smokable article 111 are coupled. However, the second wrapping paper 113 may be omitted, and the tubular member 114, the hollow filter portion 116, the filter portion 115, and the smokable article 111 may be coupled by using the first wrapping paper 112. A lip release agent 117, for allowing a lip of a user to be easily separated from the second wrapping paper 113, is applied to an outer surface of the second wrapping paper 113 in the vicinity of an end portion on the filter portion 115 side. A portion of the flavor generating article 110 to which the lip release agent 117 is applied functions as an inhalation port of the flavor generating article 110.

The smokable article 111 may include, for example, a flavor source such as tobacco and an aerosol source. The first wrapping paper 112, which wraps the smokable article 111, may be a sheet member having air-permeability. The tubular member 114 may be a paper tube or a hollow filter. In the example illustrated in the figure, the flavor generating article 110 includes the smokable article 111, the tubular member 114, the hollow filter portion 116, and the filter portion 115, but the configuration of the flavor generating article 110 is not limited to this. For example, the hollow filter portion 116 may be omitted, and the tubular member 114 and the filter portion 115 may be disposed adjacent to each other.

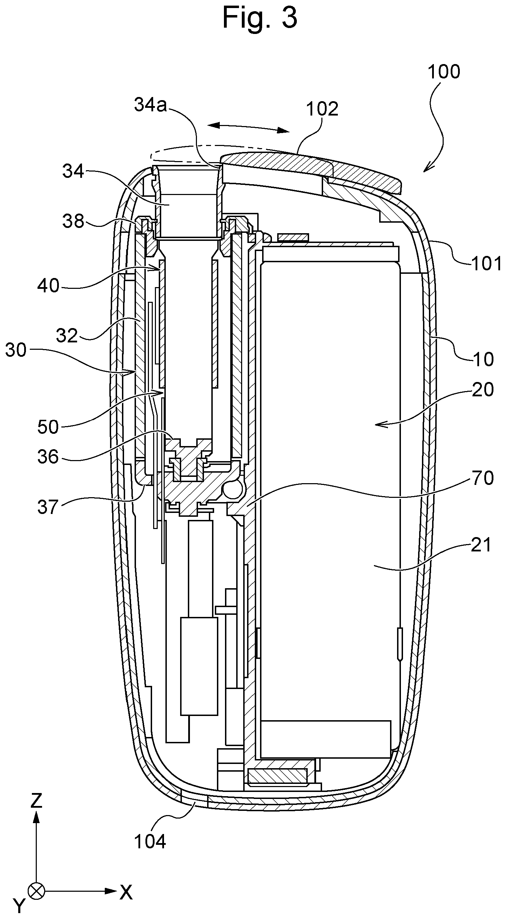

Next, the internal structure of the flavor inhaler 100 will be described. Fig. 3 is a sectional view of the flavor inhaler 100 taken along line 3-3 of Fig. 1B. As illustrated in Fig. 3, an inner housing 10, in which contents, such as a power supply unit 20 and the atomizer 30 described below, are placed, is provided on the inside of the outer housing 101 of the flavor inhaler 100. Here, the power supply unit 20 and the atomizer 30 are supported by a chassis 70 (corresponding to an example of a supporter), and the chassis 70 is fixed to the inner housing 10. The inner housing 10 is formed of, for example, a resin, and in particular, may be formed of polycarbonate (PC), ABS (Acrylonitrile-Butadiene-Styrene) resin, PEEK (polyetheretherketone), a polymer alloy including a plurality of types of polymers, or the like. The inner housing 10 may include, for example, a portion formed of a metal such as aluminum. Here, from the viewpoint of heat resistance, machinability, and strength, it is preferable that the inner housing 10 be polycarbonate. The power supply unit 20 and the atomizer 30 are provided in the internal space of the inner housing 10. It is not possible to replace the power supply unit 20 and the atomizer 30 after the flavor inhaler 100 has been assembled. The outer housing 101 and the inner housing 10 may be collectively called a casing.

As illustrated in the figure, the power supply unit 20 has a power supply 21 (corresponding to an example of a battery) that extends in the insertion direction of the flavor generating article 110 (the Z-axis direction). The power supply 21 may be, for example, a rechargeable battery or a non-rechargeable battery. The power supply 21 is electrically connected to the atomizer 30. Thus, the power supply 21 can supply electric power to the atomizer 30 so that the flavor generating article 110 is heated appropriately.

As illustrated in the figure, the atomizer 30 has the chamber 50 that extends in the insertion direction of the flavor generating article 110 (the Z-axis direction), a heater 40 that covers a part of the chamber 50, a heat insulator 32, and an insertion guide member 34 having a substantially tubular shape. The chamber 50 is configured to accommodate the flavor generating article 110. The heater 40 is configured to contact the outer peripheral surface of the chamber 50 and to heat the flavor generating article 110 accommodated in the chamber 50. As illustrated in the figure, a bottom member 36 may be provided at a bottom portion of the chamber 50. The bottom member 36 may function as a stopper that positions the flavor generating article 110 inserted into the chamber 50. The bottom member 36 has recesses and protrusions at a surface that the flavor generating article 110 contacts, and may define a space where air can be supplied on the surface that the flavor generating article 110 contacts. The bottom member 36 may be formed of, for example, a resin, and in particular, may be formed of polycarbonate (PC), ABS (Acrylonitrile-Butadiene-Styrene) resin, PEEK (polyetheretherketone), a polymer alloy containing a plurality of types of polymers, or the like, or a metal such as aluminum. In order to suppress conduction of heat to the heat insulator 32 and the like, it is preferable that the bottom member 36 be formed of a material having a low heat conductivity.

The heat insulator 32 is substantially tubular as a whole, and is disposed so as to cover the chamber 50. The heat insulator 32 may include, for example, an aerogel sheet. The insertion guide member 34 is provided between the slide cover 102 in the closed position and the chamber 50. The insertion guide member 34 is configured so that, when inserted into the casing from the opening of the outer housing 101, a latch engages with the casing and the insertion guide member 34 cannot get out of the casing. The insertion guide member 34 may be formed of, for example, a resin, and in particular, may be formed of polycarbonate (PC), ABS (Acrylonitrile-Butadiene-Styrene) resin, PEEK (polyetheretherketone), a polymer alloy including a plurality of types of polymers, or the like. The insertion guide member 34 may be formed of a metal, glass, ceramics, or the like. From the viewpoint of heat resistance, it is preferable that the insertion guide member 34 be PEEK. When the slide cover 102 is in the open position, the insertion guide member 34 communicates with the outside of the flavor inhaler 100, and guides insertion of the flavor generating article 110 into the chamber 50 by inserting the flavor generating article 110 into a through-hole 34a of the insertion guide member 34. The slide cover 102 is configured to, when in the open position, cover at least a part of the insertion guide member 34 in the axial direction of the chamber 50 while exposing the through-hole 34a of the insertion guide member 34 to the outside. In Fig. 3, a two-dot chain line illustrates a state in which the slide cover 102 is closed so as to cover the entirety of the through-hole 34a of the insertion guide member 34.

The flavor inhaler 100 further has a first holder 37 and a second holder 38 that hold two ends of each of the chamber 50 and the heat insulator 32. The first holder 37 is disposed so as to hold an end portion of each of the chamber 50 and the heat insulator 32 on the negative Z-axis direction side. The second holder 38 is disposed so as to hold an end portion of each of the chamber 50 and the heat insulator 32 on the slide cover 102 side (the positive Z-axis direction side).

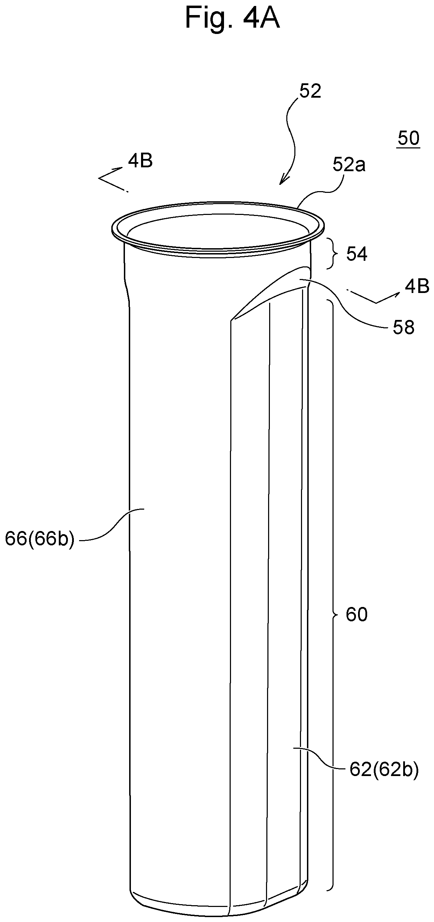

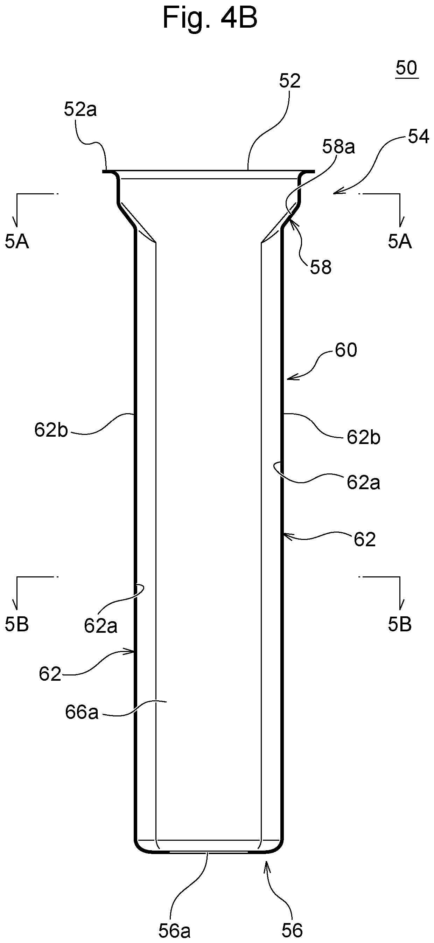

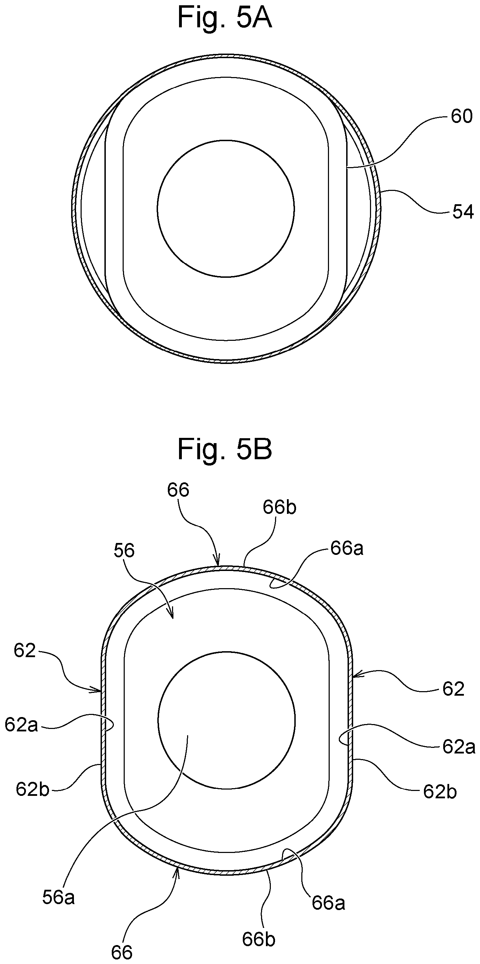

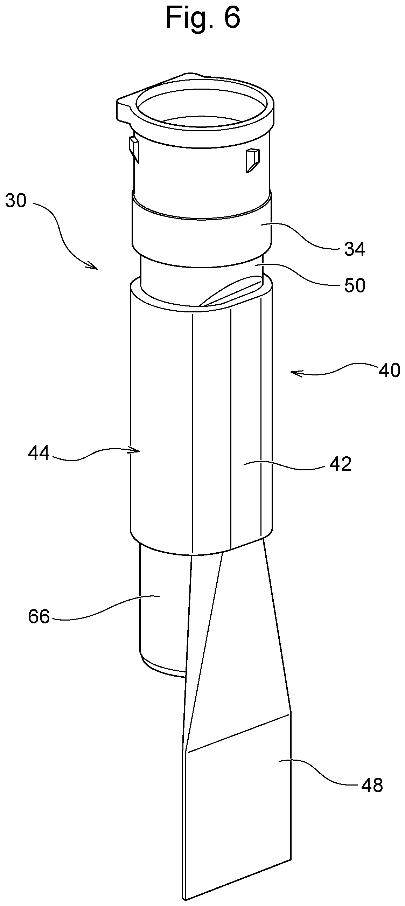

Next, the structure of the chamber 50 will be described. Fig. 4A is a perspective view of the chamber 50. Fig. 4B is a sectional view of the chamber 50 taken along line 4B-4B of Fig. 4A. Fig. 5A is a sectional view of the chamber 50 taken along line 5A-5A of Fig. 4B. Fig. 5B is a sectional view of the chamber 50 taken along line 5B-5B of Fig. 4B. Fig. 6 is a perspective view of the chamber 50 and the heater 40.

As illustrated in Figs. 4A and 4B, the chamber 50 may have a tubular shape including an opening 52 into which the flavor generating article 110 is inserted and a tubular side wall portion 60 that accommodates the flavor generating article 110. A flange portion 52a is formed at an end portion of the chamber 50 that defines the opening 52. The chamber 50 is disposed so that the flange portion 52a, which is provided opposite to a bottom portion 56, faces the opening of the outer housing 101. The chamber 50 is preferably formed of a material having heat resistance and low thermal expansion coefficient, and may be formed of, for example, stainless steel or the like. The chamber 50 may be formed of, besides a metal, a resin such as PEEK, glass, ceramics, or the like. Thus, it is possible to effectively heat the flavor generating article 110 from the chamber 50. The chamber 50 need not have a tubular shape, and may have a cup-like shape.

As illustrated in Figs. 4B and 5B, the side wall portion 60 includes a contact portion 62 and a spacing portion 66. When the flavor generating article 110 is disposed at a desirable position in the chamber 50, the contact portion 62 contacts or presses a part of the flavor generating article 110, and the spacing portion 66 is spaced apart from the flavor generating article

110. In present description, the phrase "a desirable position in the chamber 50" means a position at which the flavor generating article 110 is appropriately heated or the position of the flavor generating article 110 when a user smokes. The contact portion 62 has an inner surface 62a and an outer surface 62b. The spacing portion 66 has an inner surface 66a and an outer surface 66b. As illustrated in Fig. 6, the heater 40 is disposed on the outer surface 62b of the contact portion 62. It is preferable that the heater 40 be disposed on the outer surface 62b of the contact portion 62 without a gap. The heater 40 may include an adhesive layer. In this case, it is preferable that the heater 40, including the adhesive layer, be disposed on the outer surface 62b of the contact portion 62 without a gap.

As illustrated in Figs. 4A and 5B, the outer surface 62b of the contact portion 62 is a flat surface. Since the outer surface 62b of the contact portion 62 is a flat surface, when a strip-shaped electrode 48 is connected to the heater 40 disposed on the outer surface 62b of the contact portion 62 as illustrated in Fig. 6, it is possible to suppress the strip-shaped electrode 48 from being bent. As illustrated in Figs. 4B and 5B, the inner surface 62a of the contact portion 62 is a flat surface. As illustrated in Figs. 4B and 5B, the thickness of the contact portion 62 is uniform.

As illustrated in Figs. 4A, 4B, and 5B, the chamber 50 has two contact portions 62 in the circumferential direction of the chamber 50, and the two contact portions 62 face each other so as to be parallel to each other. It is preferable that at least a part of the distance between the inner surfaces 62a of the two contact portions 62 be smaller than the width of a portion of the flavor generating article 110 that is inserted into the chamber 50 and that is disposed between the contact portions 62.

As illustrated in Fig. 5B, the inner surface 66a of the spacing portion 66 may have a section that is arc-shaped as a whole in a plane perpendicular to the longitudinal direction (the Z-axis direction) of the chamber 50. The spacing portion 66 is disposed so as to be adjacent to the contact portion 62 in the circumferential direction.

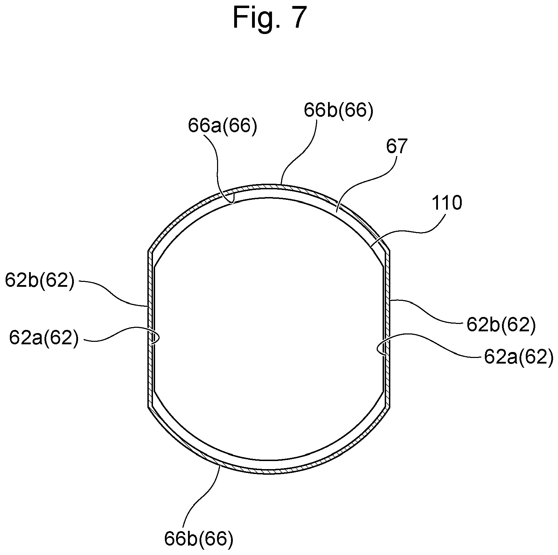

As illustrated in Fig. 4B, the chamber 50 may have a hole 56a in the bottom portion 56 thereof so that the bottom member 36 illustrated in Fig. 3 extends through the hole 56a to be disposed inside the chamber 50. The bottom member 36 may be fixed to the inside of the bottom portion 56 of the chamber 50 by using an adhesive or the like. The adhesive, which is interposed between the bottom member 36 and the bottom portion 56, may be made of a resin material such as an epoxy resin. Instead of this, an inorganic adhesive, such as cement or welding, may be used. The bottom member 36, which is provided in the bottom portion 56, may support a part of the flavor generating article 110 inserted into the chamber 50 so that at least a part of an end surface of the flavor generating article 110 is exposed. The bottom portion 56 may support a part of the flavor generating article 110 so that the exposed end surface of the flavor generating article 110 communicates with a gap 67 described below (see Fig. 7).

As illustrated in Figs. 4A, 4B, and 5A, it is preferable that the chamber 50 have a tubular non-holding portion 54 between the opening 52 and the side wall portion 60. In a state in which the flavor generating article 110 is positioned at a desirable position in the chamber 50, a gap may be formed between the non-holding portion 54 and the flavor generating article 110. As illustrated in Figs. 4A and 4B, it is preferable that the chamber 50 have a first guide portion 58 having a taper surface 58a that connects an inner surface of the non-holding portion 54 and the inner surface 62a of the contact portion 62.

As illustrated in Fig. 6, the heater 40 has a heating element 42. The heating element 42 may be, for example, a heating track. It is preferable that the heating element 42 be disposed so as to heat the contact portion 62 without contacting the spacing portion 66 of the chamber 50. In other words, it is preferable that the heating element 42 be disposed only on the outer surface of the contact portion 62. The heating element 42 may have a difference in heating ability between a portion for heating the spacing portion 66 of the chamber 50 and a portion for heating the contact portion 62. To be specific, the heating element 42 may be configured to heat the contact portion 62 to a temperature higher than the temperature of the spacing portion 66. For example, the disposition density of the heating track of the heating element 42 in the contact portion 62 and the spacing portion 66 may be adjusted. The heating element 42 may be wound around the outer periphery of the chamber 50 to have substantially the same heating ability around the entire periphery of the chamber 50. As illustrated in Fig. 6, it is preferable that the heater 40 have, in addition to the heating element 42, an electric insulator 44 that covers at least one surface of the heating element 42. In the present embodiment, the electric insulator 44 is disposed so as to cover both surfaces of the heating element 42.

Fig. 7 is a sectional view, corresponding to Fig. 5B, illustrating a state in which the flavor generating article 110 is disposed at a desirable position in the chamber 50. As illustrated in Fig. 7, when the flavor generating article 110 is disposed at a desirable position in the chamber 50, the flavor generating article 110 may contact and be pressed by the contact portion 62 of the chamber 50. On the other hand, the gap 67 is formed between the flavor generating article 110 and the spacing portion 66. The gap 67 may communicate with the opening 52 of the chamber 50 and an end surface of the flavor generating article 110 positioned in the chamber 50. Thus, air that has flowed in from the opening 52 of the chamber 50 can flow to the inside of the flavor generating article 110 through the gap 67. In other words, an air flow path (the gap 67) is formed between the flavor generating article 110 and the spacing portion 66.

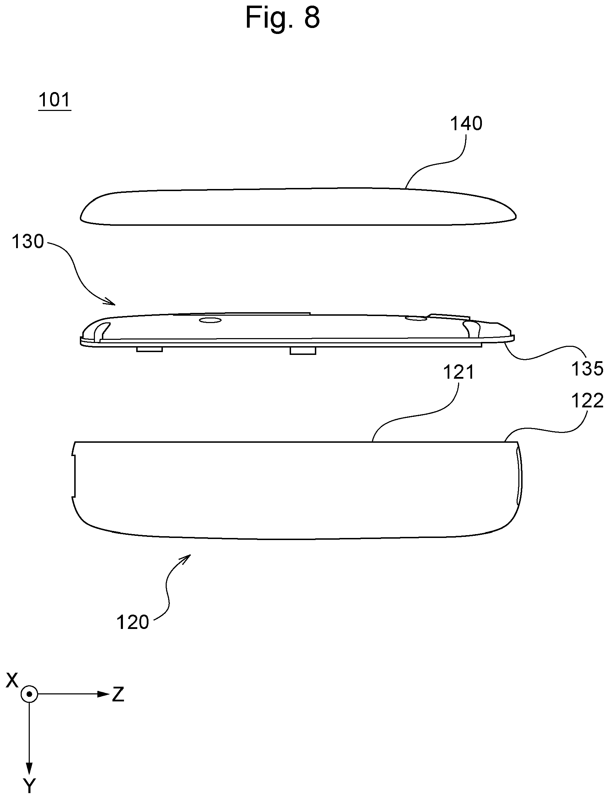

Next, the structure of the outer housing 101 will be described. Fig. 8 is an exploded side view of the outer housing 101. As illustrated in Fig. 8, the outer housing 101 has a first housing 120 (corresponding to an example of a first member) having an opening 121, a second housing 130 (corresponding to an example of a second member) that covers the opening 121 of the first housing 120, and a lid portion 140 that covers at least a part of the second housing 130.

The first housing 120 and the second housing 130 may be coupled to each other by a first coupler and a second coupler described below. Here, a peripheral portion 122 of the opening 121 of the first housing 120 and a peripheral portion 135 of the second housing 130 substantially coincide. That is, the first housing 120 and the second housing 130 are coupled to each other at the peripheral portion 122 and the peripheral portion 135. When the first housing 120 and the second housing 130 are coupled to each other, a container, in which contents such as the power supply unit 20 and the atomizer 30 are to be accommodated, is formed inside the first housing 120 and the second housing 130. The lid portion 140 may be removably attached to the second housing 130.

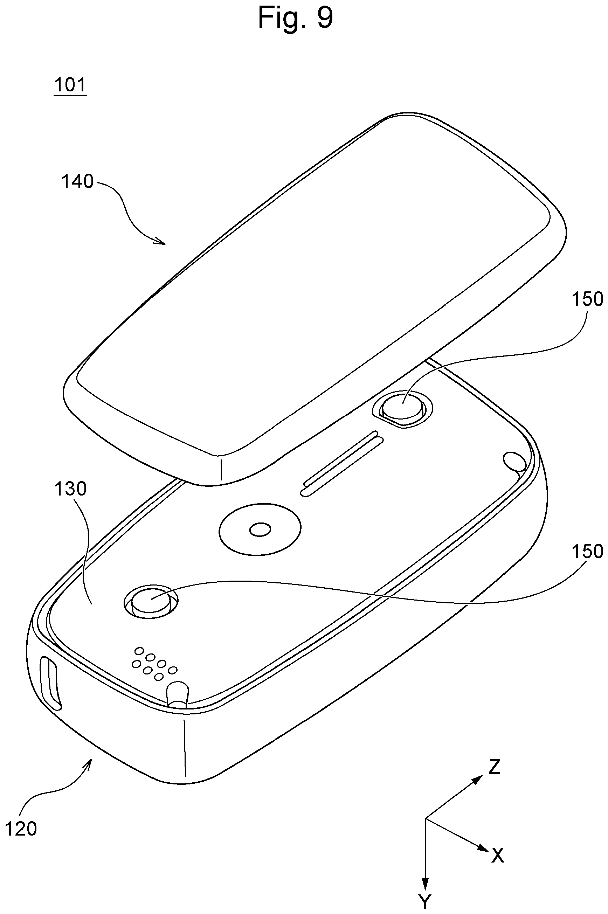

Fig. 9 is a perspective view of the outer housing 101. Fig. 9 illustrates a state in which the first housing 120 and the second housing 130 are coupled to each other and the lid portion 140. As illustrated in Fig. 9, on the second housing 130, two magnets 150 are provided at positions in the vicinity of the center in the X-axis direction and in the vicinities of two ends in Z-axis direction. On a surface of the lid portion 140 facing the second housing 130, magnetic bodies (not shown) are provided at positions corresponding to the magnets 150. When the lid portion 140 is being attached to the second housing 130, the magnets 150 of the second housing 130 and the magnetic bodies of the lid portion 140 cause the lid portion 140 to be attracted to the second housing 130 by magnetic forces generated therebetween.

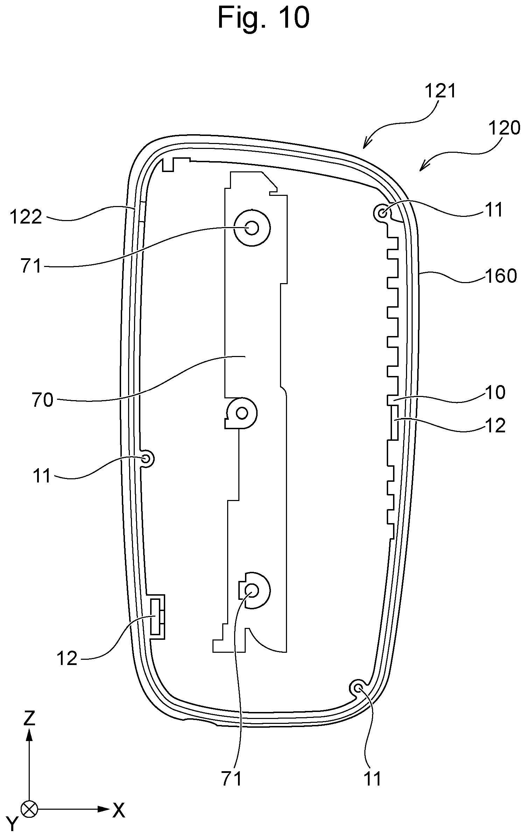

Fig. 10 is a front view of the first housing 120 and the chassis 70. As illustrated in Fig. 10, the first housing 120 includes an outer case 160 and the inner housing 10, and has a substantially rectangular shape in a plan view with respect to the peripheral portion 122 of the first housing 120. The outer case 160 constitutes an outermost part of the outer housing 101 of the flavor inhaler 100. The inner housing 10 has an outer shape along an inner surface of the outer case 160, and is fixed to the inside of the outer case 160. The chassis 70 is fixed to the inner housing 10 as described above. In the present invention, the shape of the first housing 120 in a plan view with respect to the peripheral portion 122 is a substantially quadrangular shape. That is, a quadrangular shape is a shape that may include a square shape and a rectangular shape.

The first housing 120 has, in the peripheral portion 122 thereof, three screw receiving holes 11 and two latch receiving holes 12 provided in the inner housing 10. The screw receiving holes 11 and the latch receiving holes 12 each constitute a first coupler. In the chassis 70, two screw receiving holes 71 are provided in the vicinities of two ends in the Z-axis direction. The screw receiving holes 71 constitute a second coupler.

The screw receiving holes 11 and the latch receiving holes 12 are spaced apart from each other in the peripheral portion 122 of the first housing 120. To be specific, the screw receiving holes 11 are provided at each of two sides of the first housing 120 that face each other, in particular, two long sides that face each other. The screw receiving holes 11 are provided, with respect to the power supply 21 (see Fig. 3) extending along a long side of the first housing 120, in the vicinities of two ends in the extension direction (the Z-axis direction). Moreover, the screw receiving hole 11 is provided in the vicinity of the negative Z-axis direction side of the heater 40 (see Fig. 3).

The latch receiving holes 12 are provided at each of two sides of the first housing 120 that face each other, in particular, two long sides that face each other. Here, the screw receiving holes 11 and the latch receiving holes 12 include portions that are disposed alternately along the peripheral portion 122 of the first housing 120. To be specific, with reference to the screw receiving hole 11 provided in the vicinity on the negative the Z-axis direction side of the heater 40, the screw receiving holes 11 and the latch receiving holes 12 are provided alternately at totally five positions in the counterclockwise direction. The total number of the screw receiving holes 11 and the latch receiving holes 12 is not limited to five, and may be changed to any appropriate number in accordance with the design.

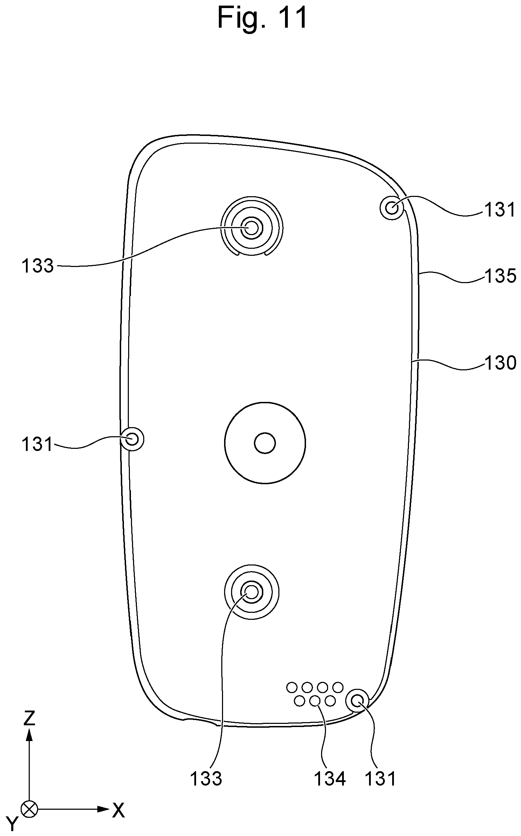

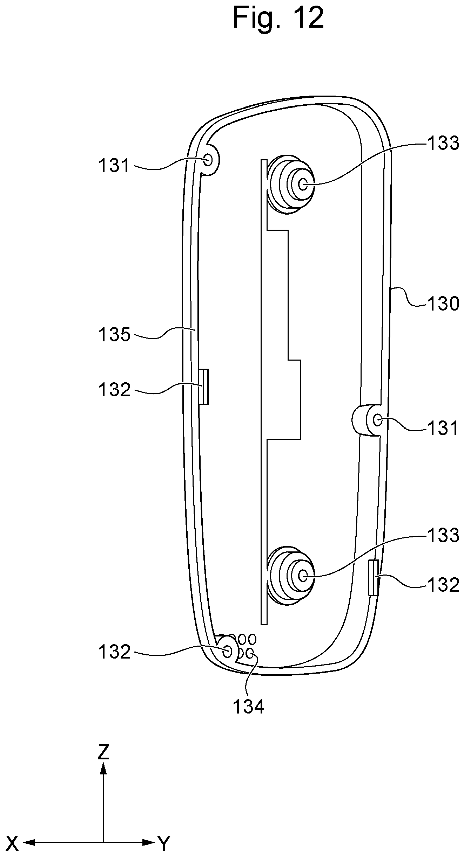

Fig. 11 is a front view of the second housing 130. Fig. 12 is a perspective view of the second housing 130. As illustrated in Figs. 11 and 12, the second housing 130 has a substantially rectangular shape in a plan view with respect to the peripheral portion 135 of the second housing 130. In the present invention, as with the first housing 120, the shape of the second housing 130 in a plan view with respect to the peripheral portion 135 is a substantially quadrangular shape. That is, a quadrangular shape is a shape that may include a square shape and a rectangular shape. The second housing 130 has, in the peripheral portion 135 thereof, three screw holes 131 and two latches 132. The screw holes 131 and the latches 132 each constitute a first coupler. In the second housing 130, two screw holes 133 are provided at positions in the vicinity of the center in the X-axis direction and in the vicinities of two ends in Z-axis direction. The screw holes 133 constitute a second coupler.

Here, the screw holes 131, the latches 132, and the screw holes 133 of the second housing 130 are provided at positions that respectively correspond to the screw receiving holes 11, the latch receiving holes 12, and the screw receiving holes 71 of the first housing 120 when the first housing 120 and the second housing 130 are coupled to each other.

That is, the screw holes 131 and the latches 132 are spaced apart from each other in the peripheral portion 135 of the second housing 130. To be specific, the screw holes 131 are provided at each of two sides of the second housing 130 that face each other, in particular, two long sides that face each other. The screw holes 131 are provided, with respect to the power supply 21 (see Fig. 3) extending along a long side of the second housing 130, in the vicinities of two ends in the extension direction (the Z-axis direction). Moreover, the screw hole 131 is provided in the vicinity of the negative Z-axis direction side of the heater 40 (see Fig. 3).

The latches 132 are provided at each of two sides of the second housing 130 that face each other, in particular, two long sides that face each other. Here, the screw holes 131 and the latches 132 include portions that are disposed alternately along the peripheral portion 135 of the second housing 130. To be specific, with reference to the screw hole 131 provided in the vicinity of the negative Z-axis direction side of the heater 40, the screw holes 131 and the latches 132 are provided alternately at totally five positions in the counterclockwise direction. The total number of the screw holes 131 and the latches 132 is not limited to five, and may be changed to any appropriate number in accordance with the design.

A vent hole 134 is provided in the second housing 130 at a position on the positive X-axis direction side and on the negative Z-axis direction side of the power supply 21. The vent hole 134 includes a plurality of holes that are adjacent to each other. The vent hole 134 is a hole through which the inside and the outside of the outer housing 101 communicate. For example, if some malfunction occurs in the power supply 21 and the pressure of a gas increases inside the outer housing 101, the gas is released to the outside of the outer housing 101 via the vent hole 134.

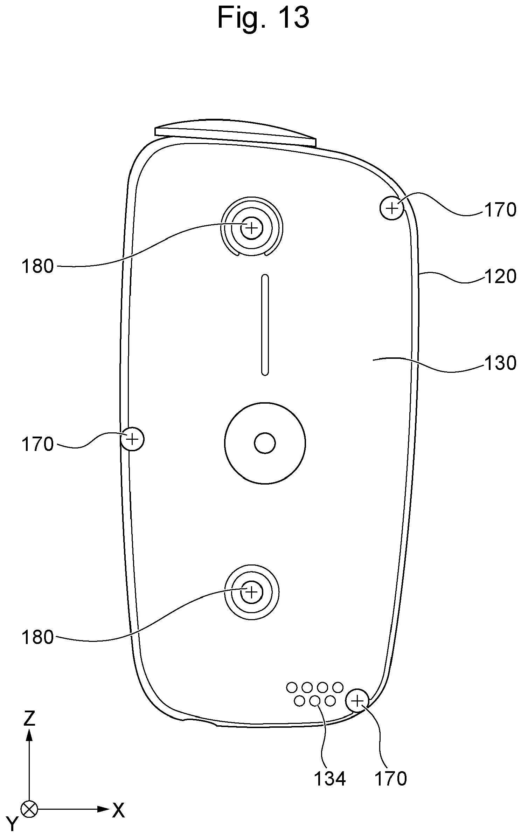

Fig. 13 is a front view of the first housing 120 and the second housing 130 that are coupled to each other. As illustrated in Figs. 10 to 13, the first housing 120 and the second housing 130 are coupled to each other by screws 170 that couple the screw receiving holes 11 and the screw holes 131 and by screws 180 that couple the screw receiving holes 71 and the screw holes 133. The screws 170 and the screws 180 respectively constitute first couplers and a second coupler. As long as the first housing 120 and the second housing 130 are coupled to each other by the screws 170, it is not necessary to provide the second coupler. The magnets 150 illustrated in Fig. 9 cover the screws 180 and are provided in the second housing 130. Therefore, a user cannot remove the screws 180, and it is possible to prevent the second housing 130 from being removed from the first housing 120.

The latch receiving holes 12 and the latches 132 may be coupled by using an adhesive or the like. The latch receiving holes 12 and the latches 132 may be coupled by, for example, snap-fit by providing recesses in the latch receiving holes 12 and providing protrusions on the latches 132, or the latch receiving holes 12 and the latches 132 may be coupled by using another method. As long as the first housing 120 and the second housing 130 are joined to each other by using the screw 170, it is not necessary to couple the latch receiving holes 12 and the latches 132. In this case, it is possible to use the latch receiving holes 12 and the latches 132 to adjust the position of the second housing 130 with respect to the first housing 120.

In this way, it is possible to couple the first housing 120 and the second housing 130 firmly, by providing the screw receiving holes 11 and the latch receiving holes 12, which constitute first couplers, for example, in the peripheral portion 122 of the first housing 120 at a plurality of positions that are spaced apart from each other and by coupling the first housing 120 and the second housing 130 with each other at the plurality of positions. Therefore, even if an impact is applied to the flavor inhaler 100, it is possible to keep accommodating the content in the container. Moreover, for example, even if some malfunction occurs in the power supply 21 and the pressure of a gas increases inside the outer housing 101, it is possible to prevent the first housing 120 from being removed from the second housing 130 and to guide the gas to the vent hole 134.

It is possible to couple the first housing 120 and the second housing 130 more firmly, by providing the screw receiving holes 11 and the latch receiving holes 12, which constitute first couplers, for example, in the peripheral portion 122 of the first housing 120 at each of two sides of the first housing 120 that face each other.

It is possible to prevent a large gap from being formed between the first housing 120 and the second housing 130 when an impact is applied to the flavor inhaler 100, by providing the screw receiving holes 11 and the latch receiving holes 12, which constitute first couplers, for example, in the peripheral portion 122 of the first housing 120 at each of two long sides of the first housing 120 that face each other.

It is possible to prevent a gap from being formed between the first housing 120 and the second housing 130 in the vicinity of the power supply 21 and to prevent the power supply 21 from spilling out from the container when an impact is applied to the flavor inhaler 100, by providing the screw receiving holes 11, which constitute first couplers, for example, in the first housing 120 in the vicinity of the power supply 21, in particular, in each of the vicinities of two ends in the extension direction of the power supply 21 (the Z-axis direction).

It is possible to prevent a gap from being formed between the first housing 120 and the second housing 130 in the vicinity of the heater 40 and to prevent the heater 40 from spilling out from the container when an impact is applied to the flavor inhaler 100, by providing the screw receiving hole 11, which constitutes first couplers, for example, in the first housing 120 in the vicinity of the negative Z-axis direction side of the heater 40.

It is possible to couple the first housing 120 and the second housing 130 firmly, by engaging the first housing 120 and the second housing 130 with each other by using the screws 170. Moreover, it is possible to improve reliability further than in a case where the first housing 120 and the second housing 130 are coupled to each other by using the latches 132.

It is possible to couple the first housing 120 and the second housing 130 with a simple configuration, by engaging the first housing 120 and the second housing 130 with each other by using the latches 132.

It is possible to maintain a state in which the first housing 120 and the second housing 130 are coupled without deviation due to the latches 132 even if the screws 170 are removed, by alternately disposing the screw receiving holes 11 and the latch receiving holes 12, which constitute first couplers, for example, in the peripheral portion 122 of the first housing 120 and by engaging the first housing 120 and the second housing 130 with each other by using the screws 170 and the latches 132.

It is possible to couple the first housing 120 and the second housing 130 more firmly, by forming the screw receiving holes 71, which constitute a second coupler, in the chassis 70 fixed to the inner housing 10 the first housing 120 and by coupling the first housing 120 and the second housing 130 to each other at the screw receiving holes 71.

Heretofore, embodiments of the present invention have been described. However, the present invention is not limited to the embodiments described above, and can be modified in various ways within scope of the technical ideas described in the claims, the description, and the drawings. Any shapes and materials that are not directly described in the description and the drawings are within the scope of the technical ideas of the present invention as long as the shapes and materials provide the operations and effects of the present invention.

For example, the flavor inhaler 100 according to the present embodiment has a so-called counter-flow air flow path through which air that has flowed in from the opening 52 of the chamber 50 is supplied to an end surface of the flavor generating article 110. However, this is not a limitation, and the flavor inhaler may have a so-called bottom-flow air flow path through which air is supplied into the chamber 50 from the bottom portion 56 of the chamber 50. The heating element 42 is not limited to a resistance heater and may be an induction heater. In this case, the heating element 42 can heat the chamber 50 by induction heating. Moreover, if the flavor generating article 110 has a susceptor, the heating element 42 can heat the susceptor of the flavor generating article 110 by induction heating. A structure in which the heating element 42 is disposed around the chamber 50 to increase the temperature of the flavor generating article 110 in the chamber 50 has been described. However, a method of increasing the temperature of the flavor generating article 110 in the chamber 50 may be a method in which the heating element 42 is made to directly contact the flavor generating article 110 or a method in which frictional heat is generated by vibration between substances in the flavor generating article 110.

### REFERENCE SIGNS LIST

- 10: inner housing
- 11: screw receiving hole
- 12: latch receiving hole
- 21: power supply
- 40: heater
- 70: chassis
- 71: screw receiving hole
- 100: flavor inhaler
- 101: outer housing
- 120: first housing
- 122: peripheral portion
- 130: second housing
- 131: screw hole
- 132: latch
- 133: screw hole
- 134: vent hole
- 135: peripheral portion
- 160: outer case
- 170: screw
- 180: screw

## Claims

1. A flavor inhaler comprising:
a first member and a second member that are coupled to each other at peripheral portions thereof to form a container for accommodating a content and each of which has a substantially quadrangular shape in a plan view with respect to the peripheral portions; and
first couplers that couple the first member and the second member to each other,
wherein the first couplers are provided in the peripheral portions of the first member and the second member at a plurality of positions that are spaced apart from each other.

2. The flavor inhaler according to claim 1,
wherein the first couplers are provided in the peripheral portions of the first member and the second member at least at each of two sides that face each other.

3. The flavor inhaler according to claim 1 or 2,
wherein the content includes a battery for driving the flavor inhaler, and
wherein at least one of the first couplers is provided in a vicinity of the battery.

4. The flavor inhaler according to claim 3,
wherein the first couplers are provided in a vicinity of each of two ends in an extension direction of the battery.

5. The flavor inhaler according to any one of claims 1 to 4,
wherein the content includes a heater for heating a flavor generating article provided in the flavor inhaler, and
wherein at least one of the first couplers are provided in a vicinity of the heater.

6. The flavor inhaler according to any one of claims 1 to 5,
wherein the first couplers couple the first member and the second member to each other by using at least one of a screw and a latch.

7. The flavor inhaler according to claim 6,
wherein the first couplers include the screw and the latch, and
wherein the flavor inhaler include a portion in which the screw and the latch are disposed alternately along the peripheral portions of the first member and the second member.

8. The flavor inhaler according to any one of claims 1 to 7, further comprising:
a supporter that is accommodated in the container and fixed to the first member to support the content; and
a second coupler that couples the second member to the supporter.
